(19) Europäisches Patentamt
European Patent Office
Office européen des brevets

(11) EP 0 892 560 B1

(12) EUROPEAN PATENT SPECIFICATION

(45) Date of publication and mention of the grant of the patent:
**13.03.2002 Bulletin 2002/11**

(51) Int Cl.^7: **H04N 7/50**

(21) Application number: **98115578.1**

(22) Date of filing: **11.04.1994**

(54) **Picture encoding method and picture encoding apparatus**

Bildkodierungsverfahren, und -vorrichtung

Méthode de codage d'images et dispositif de codage d'images

(84) Designated Contracting States:
**DE FR GB NL**

(30) Priority: **09.04.1993 JP 10594393**

(43) Date of publication of application:
**20.01.1999 Bulletin 1999/03**

(62) Document number(s) of the earlier application(s) in accordance with Art. 76 EPC:
**94912090.1 / 0 645 930**

(73) Proprietor: **SONY CORPORATION**
**Tokyo 141 (JP)**

(72) Inventor: **Oda, Tsuyoshi, c/o Sony Corporation**
**Shinagawa-ku, Tokyo 141 (JP)**

(74) Representative: **DeVile, Jonathan Mark, Dr. et al**
**D. Young & Co**
**21 New Fetter Lane**
**London EC4A 1DA (GB)**

(56) References cited:
**US-A- 5 073 820** **US-A- 5 144 424**

- **GRUENEBERG K ET AL: "HARDWARE IMPLEMENTATION OF THE FRAMESTORE AND DATA RATE CONTROL FOR A DIGITAL HDTV-VCR" SIGNAL PROCESSING OF HDTV. PROCEEDINGS OF THE INTERNATIONAL WORKSHOP ON HDTV, vol. 4, 1993, pages 51-58, XP000199113**
- **VISCITO E ET AL: "A VIDEO COMPRESSION ALGORITHM WITH ADAPTIVE BIT ALLOCATION AND QUANTIZATION" VISUAL COMMUNICATION AND IMAGE PROCESSING '91: VISUAL COMMUNICATION, BOSTON, NOV. 11 - 13, 1991, vol. PART 1, no. VOL. 1605, 11 November 1991, pages 58-72, XP000479218 KOU-HU TZOU;TOSHIO KOGA**
- **WEN-HSIUNG CHEN ET AL: "Adaptive coding of monochrome and color images" IEEE TRANSACTIONS ON COMMUNICATIONS, NOV. 1977, USA, vol. COM-25, no. 11, pages 1285-1292, XP002085968 ISSN 0090-6778**
- **ABBAS RAZAVI ET AL: "VLSI IMPLEMENTATION OF AN IMAGE COMPRESSION ALGORITHM WITH A NEW BIT RATE CONTROL CAPABILITY" DIGITAL SIGNAL PROCESSING 2, ESTIMATION, VLSI, SAN FRANCISCO, MAR. 23 - 26, 1992, vol. 5, no. CONF. 17, 23 March 1992, pages 669-672, XP000341509 INSTITUTE OF ELECTRICAL AND ELECTRONICS ENGINEERS**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Technical Field

This invention relates to a picture encoding method, a picture encoding apparatus and a picture recording medium, and more particularly to a picture encoding method, a picture encoding apparatus and a picture recording medium which are used in a system for implementing encoding for storage to a video signal of moving picture to record the coded signal onto a picture recording medium such as an optical disc, a magnetic disc, or a magnetic tape, etc., or a system for transmitting a video signal of moving picture through a transmission path.

Background Art

Hitherto, in a system for transmitting a video signal of moving picture to remote place, for example, as in the television conference system, the television telephone system, etc., or a system for recording a video signal of moving picture onto a picture recording medium such as an optical disc, a magnetic disc or a magnetic tape, etc., or reproducing a recorded video signal of moving picture, there is adopted for the purpose of efficiently utilizing transmission path (or picture recording medium), a scheme to implement so called efficient encoding to a video signal by making use of correlation between lines or correlation between frames that video signal has to reduce redundancies in the spatial axis direction and the time axis direction to transmit only significant information, thus to improve transmission efficiency.

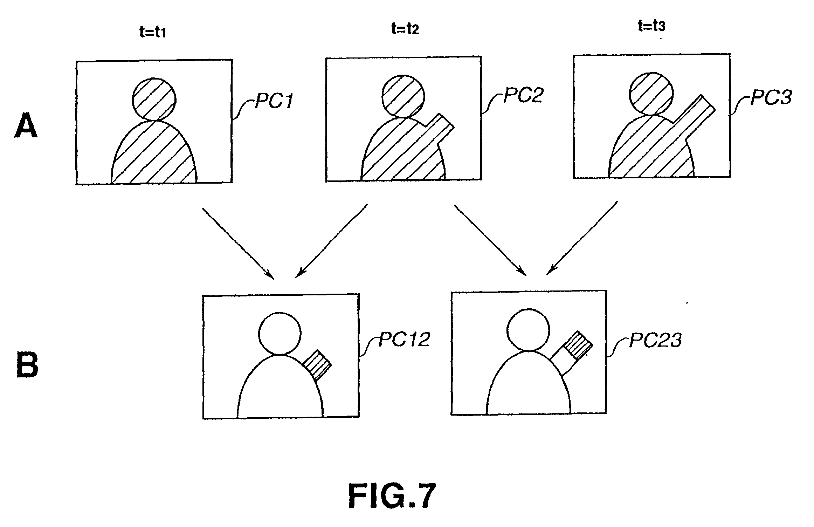

For example, in encoding processing in the spatial axis direction (hereinafter intra-frame coding processing), e.g., correlation between lines of a video signal is utilized as shown in FIG. 7A. In the case of attempting to transmit respective pictures PC1, PC2, PC3 ··· constituting a moving picture at times t1, t2, t3 ···, picture data to be transmission-processed is caused to undergo one-dimensional coding, e.g., within the same scanning line, or a picture is divided into, e.g., a plurality of blocks to allow picture data of respective blocks to undergo two-dimensional coding to thereby carry out data compression, thus to improve transmission efficiency.

Moreover, in coding processing in the time axis direction (hereinafter referred to as intra-frame coding processing), intra-frame correlation of video signal is utilized to determine, by so called predictive coding, for example, picture data PC12, PC23 ··· comprised of deficiencies (so called predictive errors) of picture data every corresponding pixels between adjacent pictures PC1 and PC2, PC2 and PC3 ··· in succession to transmit these picture data PC12, PC23, ··· to thereby carry out data compression, thus to improve transmission efficiency.

Thus, as compared to the case where all picture data of pictures PC1, PC2, PC3 ··· are transmitted, a video signal can be transmitted by extremely lesser data quantity.

Further, in the predictive coding in the above-described intra-frame coding processing, motion compensated prediction is used, e.g., in macro block units in order to further improve efficiency. Namely, e.g., in the case where a person at the central portion of picture moves, or the like, motion (movement) of an object moving in the picture is detected to correct position of picture data used for prediction in the former picture by that motion to carry out predictive coding, thereby making it possible to improve coding efficiency. However, even when such motion compensated prediction is employed, many data must be transmitted with respect to the portion where an object moves and appears from behind. In view of this, not only motion compensation in the above-described forward direction, but also motion compensation in backward direction or in both directions of forward and backward directions are carried out in combination, thereby making it possible to further improve coding efficiency.

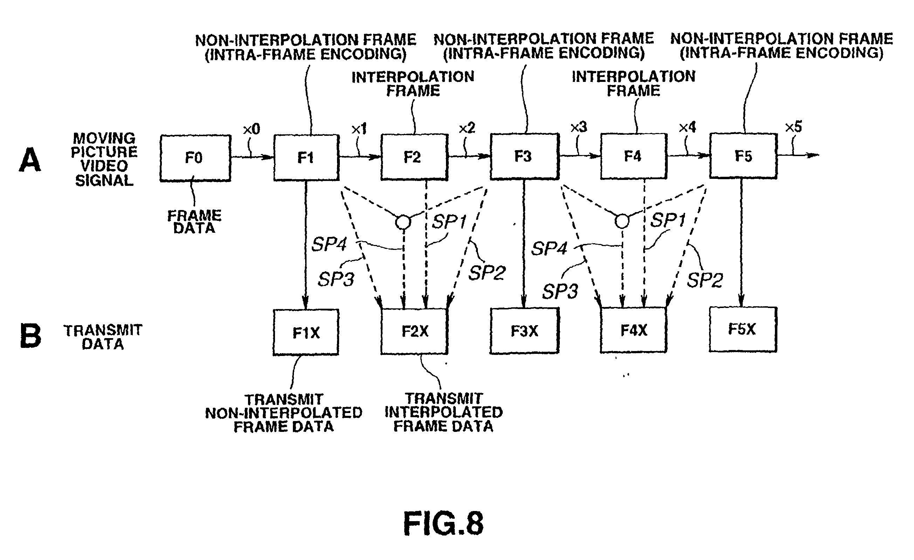

In actual terms, as shown in FIG. 8A, in macro blocks of frame data F0, F1, F2, F3 of the 0th, first, second, third ··· frames of a video signal of moving picture to be transmitted, in the case where there took place changes of pictures as respectively indicated by motion vectors x0, x1, x2, x3 ··· between frames in succession, device on the transmitter side designates frames at intervals of a predetermined number of frames (e.g., every other frame), i.e., second, fourth ··· frames as interpolation frame to implement so called predetermined interpolation frame processing to these interpolation frames as shown in FIG. 8B to thereby generate transmit interpolated frame data F2X, F4X ··· Further, with respect to non-interpolation frames, the device on the transmitting side implements a predetermined coding processing to frame data F1, F3 ··· to generate transmit non-interpolated frame data F1X, F3X ···.

For example, difference SP2 (predictive error) between motion compensated frame data F3 and F2, difference SP3 between motion compensated frame data F1 and F2, and difference SP4 between frame data obtained by implementing interpolation processing to motion compensated frame data F1, F3 and frame data F2 are respectively determined in macro block units to compare difference (data) SP1 of frame data F2 and those differences. Then, data having minimum data quantity generated of those data SP1 ~ SP4 is caused to be transmit interpolated data F2X in macro block units. Similarly, transmit interpolated data F4X ... with respect to respective interpolation frames are generated. Further, e.g., DCT processing and variable length coding processing, etc. are implemented to frame data F1, F3 ··· of non-interpolation frames to generate transmit non-interpolated frame data F1X, F3X ···.

The transmit non-interpolated frame data F1X, F3X ··· and transmit interpolated frame data F2X, F4X ··· are transmitted to the device on the receiving side as transmit data along with motion vectors x0, x1, x3 ···.

On the other hand, the device on the receiving side implements decoding processing corresponding to coding processing on the transmitting side to transmit data (transmit non-interpolated frame data F1X, F3X ···, transmit interpolated frame data F2X, F4X ···, data of motion vectors x0, x1, x3 ···), thus to reproduce frame data F0, F1, F2, F3 ···. As a result, motion compensation is implemented not only in forward direction but also in backward direction or in forward and backward directions, thereby making it possible to further improve coding efficiency.

Picture encoding apparatus and picture decoding apparatus having the above-described function will now be described.

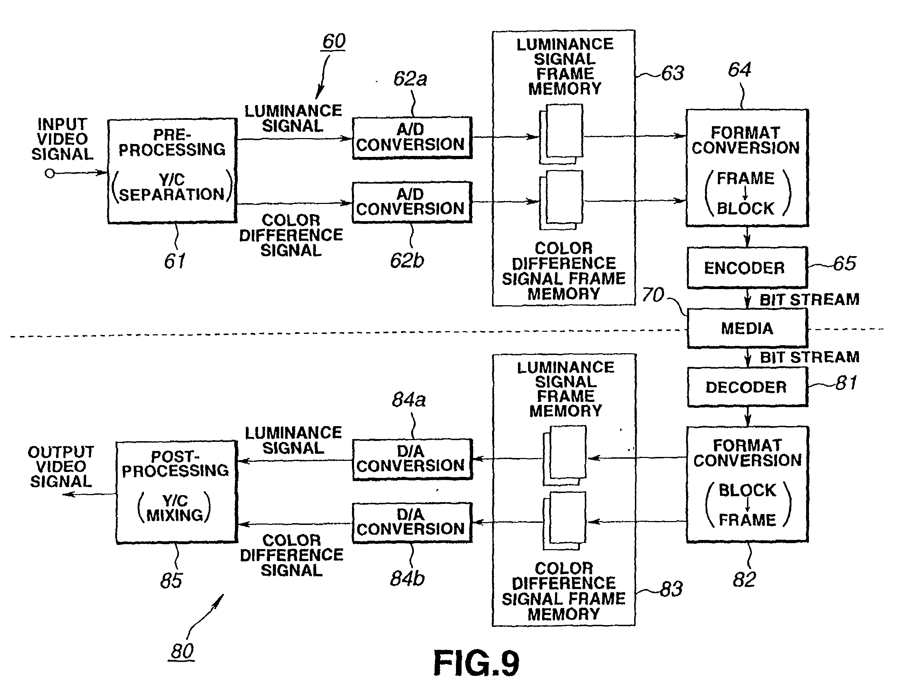

This picture encoding apparatus comprises, as shown in FIG. 9, a pre-processing circuit 61 for separating an input video signal VD into luminance signal and color difference signal, analog/digital (hereinafter referred to as A/D) converting circuits 62a, 62b for respectively converting the luminance signal and the color difference signal from the pre-processing circuit 61 into digital signals, a frame memory group 63 for storing luminance data and color difference data (hereinafter referred to as picture data) from the A/D converting circuits 62a, 62b, a format converting circuit 64 for reading out picture data from the frame memory group 63 in accordance with block format, and an encoder 65 for implementing efficient coding to picture data of block from the format converting circuit 64.

In operation, pre-processing circuit 61 separates input video signal VD into luminance signal and color difference signal. A/D converting circuits 62a, 62b respectively converts luminance signal and color difference signal into luminance data and color difference data each comprised of 8 bits. Frame memory group 63 stores these luminance and color difference data.

Format converting circuit 64 reads out, in accordance with block format, picture data (luminance data, color difference data) stored in the frame memory group 63. Encoder 65 encodes the picture data thus read out by a predetermined efficient coding to output bit stream.

This bit stream is delivered to picture decoding apparatus 80 through transmission media 70 comprised of transmission path or picture recording media such as, optical disc, magnetic disc or magnetic tape, etc.

This picture decoding apparatus 80 comprises, as shown in the FIG. 9 mentioned above, decoder 81 corresponding to the encoder 65, format converting circuit 82 for converting picture data reproduced by the decoder 81 into frame format, frame memory groups 83 for storing picture data from the format converting circuit 82, D/A converting circuits 84a, 84b for converting luminance data, color difference data which have been read out from the frame memory group 83 into analog signals, and post-processing circuit 85 for mixing luminance signal, color difference signal from the D/A converting circuits 84a, 84b, thus to generate output video signal.

Decoder 81 decodes bit stream by decoding corresponding to efficient coding of encoder 65 to reproduce picture data of block format. Format converting circuit 82 converts this picture data into frame format to store it into frame memory group 83.

D/A converting circuits 84a, 84b respectively convert luminance data and color difference data which have been read out from frame memory group 83 into luminance signal and color difference signal. Post-processing circuit 81 mixes these luminance signal and color difference signal, thus to generate output video signal.

In actual terms, pre-processing circuit 61 and A/D converting circuits 62a, 62b convert luminance signal and color difference signal into digital signal as described above to reduce quantity of data so that the numbers of pixels become equal to one half of those of luminance signal in upper and lower directions and in left and right directions with respect to the luminance signal thereafter to implement time axis multiplexing processing thereto to deliver luminance data and color difference data thus obtained to frame memory group 63.

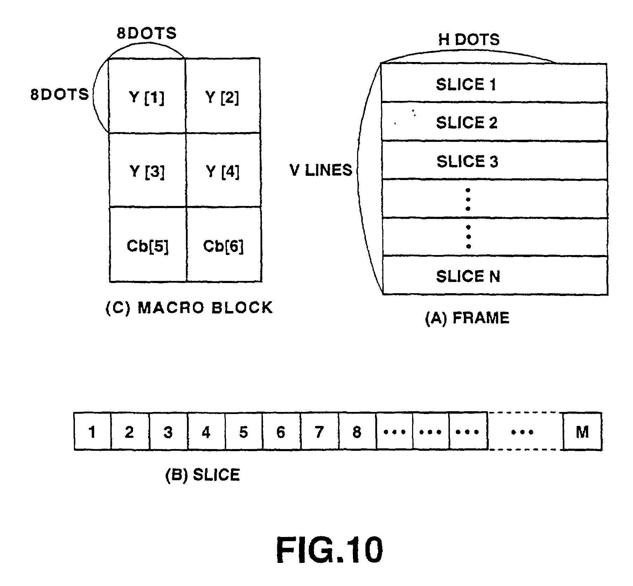

From frame memory group 63, luminance data and color difference data are read out in accordance with block format as described above. Namely, e.g., picture data of one frame is divided into N slices as shown in FIG. 10A. Each slice is caused to include M macro blocks as shown in FIG. 10B. Each macro block is composed of luminance data Y1, Y2, Y3, Y4 of four luminance blocks consisting of 8x8 pixels adjacent in upper and lower directions and in left and right directions and color difference data Cb, Cr of color blocks consisting of 8x8 pixels in a range corresponding to these four luminance blocks. From frame memory group 63, luminance data and color difference data are read out so that picture data are successive in macro block units within slice and are successive in order of Y1, Y2, Y3, Y4, Cb, Cr within macro block. Picture data which have been read out in accordance with block format in this way are delivered to encoder 65.

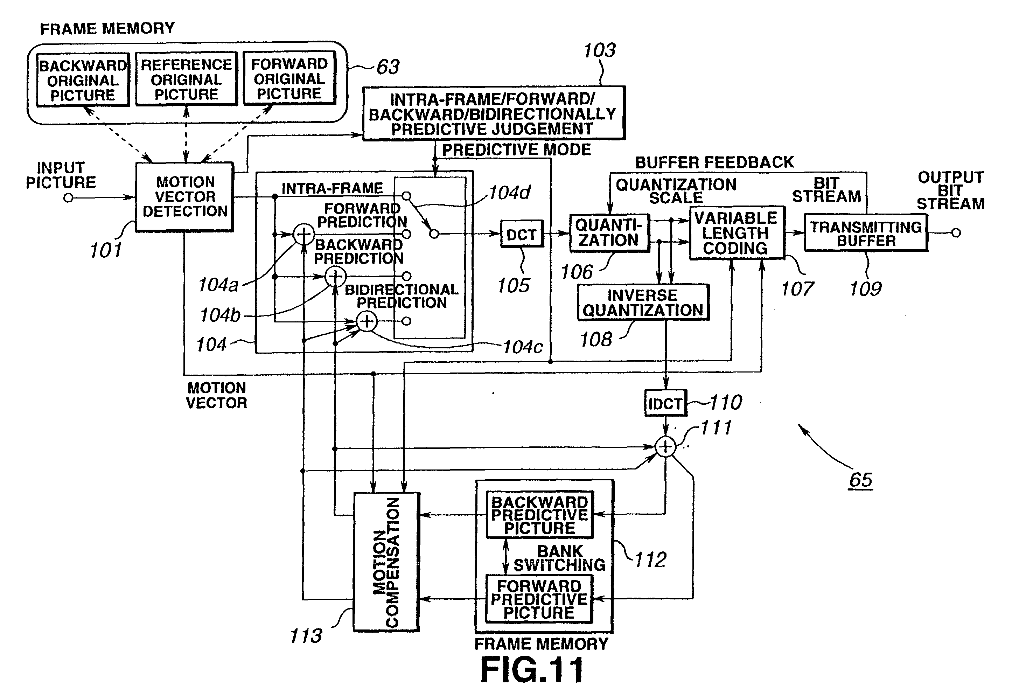

Encoder 65 comprises motion vector detecting circuit 101 as shown in FIG. 11. This motion vector detecting circuit 101 detects, in macro block units, motion vector of picture data delivered thereto in accordance with block format. Namely, motion vector detecting circuit 101 detects, in macro block units, motion vector of current reference picture by forward original picture and/or backward original picture stored in frame memory group 63. Here, detection of motion vector is carried out such that minimum one of absolute value sums of differences between frames in macro block units is caused to be corresponding motion vector. The motion vector thus detected is delivered to motion compensating circuit 113, etc., and intra-frame differences in macro block units are delivered to intra-frame/forward/backward bidirectionally predictive judging circuit 103.

This intra-frame/forward/backward/bidirectionally predictive judging circuit 103 determines predictive mode of reference block on the basis of this value to control predictive coding circuit 104 so as to carry out switching of intra-frame/forward/backward /bidirectional prediction in macro block units. Predictive coding circuit 104 comprises adding circuits 104a, 104b, 104c and selecting (changeover) switch 104d, and is operative so that when predictive coding mode is intra-frame coding mode, it selects input picture itself, and when predictive coding mode is forward/backward/ bidirectionally predictive mode, it selects differences (hereinafter referred to as difference data) every pixels of input picture data with respect to respective predictive pictures, thus to deliver the selected data to DCT circuit 105.

DCT circuit 105 implements DCT processing to input picture data or difference data in block units by making use of the two-dimensional correlation of video signal to deliver coefficient data thus obtained to quantizing circuit 106.

The quantizing circuit 106 quantizes coefficient data by using quantization step size (quantization scale) determined every macro block or slice to deliver quantized data thus obtained to variable length coding (hereinafter referred to as VLC) circuit 107 and inverse quantizing circuit 108. Meanwhile, quantization step size used for this quantization is determined so as to take a value such that transmitting buffer memory 109 which will be described later does not break by providing feedback of buffer residual of transmitting buffer 109. This quantization step size is also delivered to VLC circuit 107 and inverse quantizing circuit 108.

VLC circuit 107 implements variable length coding to quantized data along with quantization step size, predictive mode and motion vector to deliver them to transmitting buffer memory 109 as transmit data.

The transmitting buffer memory 109 temporarily stores transmit data thereafter to read out it at a predetermined bit rate to thereby smooth transmit data to output it as bit stream, and to feed quantization control signal in macro block units back to quantizing circuit 106 in accordance with residual data quantity remaining in the memory to control quantization step size. Thus, transmitting buffer memory 109 adjusts data quantity generated as bit strem to maintain data of appropriate residual (remaining capacity) (data quantity such that no overflow or underflow takes place) within the memory. For example, when data residual of transmitting buffer memory 109 increase to allowed upper limit, transmitting buffer memory 109 allows quantization step size of quantizing circuit 106 to be large by quantization control signal, thus to reduce data quantity of quantized data. On the other hand, when data residual of transmit buffer memory 109 decrease down to allowed lower limit, transmitting buffer memory 109 allows quantization step size of quantizing cirucit 106 to be small by quantization control signal to thereby increase data quantity.

In this way, bit stream outputted from buffer memory 109 is delivered to picture decoded unit 80 through transmission media 70 comprised of a transmission path or a picture recording medium such as optical disc, magnetic disc, or magnetic tape etc. at a predetermined bit rate as described above.

On the other hand, inverse quantizing circuit 108 inverse-quantizes quantized data delivered from quantizing circuit 106 to reproduce coefficient data (quantization distortion is added) corresponding to output of the about-described DCT circuit 105 to deliver the coefficient data to Inverse Discrete Cosine Transform (hereinafter referred to as IDCT) circuit 110.

The IDCT circuit 110 implements IDCT processing to the coefficient data to reproduce picture data corresponding to input picture data in the intra-frame coding mode, and to reproduce difference data corresponding to output of predictive coding circuit 104 in the forward/backward/bidirectionally predictive modes, thus to deliver it to adding circuit 111.

When predictive coding mode is the forward/backward/ bidirectionally predictive modes, the adding circuit 111 is supplied with motion-compensated predictive picture data from motion compensating circuit 113 which will be described later to described later to add the motion-compensated predictive picture data and difference data to thereby reproduce picture data corresponding to input picture data.

The picture data reproduced in this way is stored into frame memory 112. Namely, inverse quantizing circuit 108 ~ adding circuit 111 constitute a local decoding circuit to locally decode quantized data outputted from quantizing circuit 106 to write decoded picture thus obtained into frame memory 112 as forward predictive picture or backward predictive picture. The frame memory 112 is comprised of a plurality of frame memories. Bank switching of the frame memory is carried out. In correspondence with picture to be encoded, single frame is outputted as forward predictive picture data, or is outputted as backward predictive picture data. Moreover, in the case of bidirectional prediction, forward predictive picture data and backward predictive picture data are, e.g., averaged. The averaged data thus obtained is outputted. These predictive picture data are entirely the same pictures as pictures reproduced by decoder 81 which will be described later. Picture to be processed next is caused to undergo forward/backward/bidirectional predictive coding on the basis of this predictive picture.

Namely, picture data which has been read out from frame memory 112 is delivered to motion compensating circuit 113. This motion compensating circuit 113 implements motion compensation to predictive picture data on the basis of motion vector to deliver the motion-compensated predictive picture data to predictive encoding circuit 104 and adding circuit 111.

Decoder 81 will now be described.

To decoder 81, bit stream is inputted through transmission media 70 is inputted. This bit stream is inputted to Variable Length Decoding (Inverse Variable Length Coding) (hereinafter referred to as IVLC) through receiving buffer 201. The IVLC circuit 202 reproduces quantized data, motion vector, predictive mode and quantization step size, etc. from bit stream. These quantized data and quantization step size are delivered to inverse quantizing circuit 203. Motion vector is delivered to motion compensating circuit 207, and predictive mode is delivered to adding circuit 205.

The operation of inverse quantizing circuit 203 ~ adding circuit 205 is the same as that of local decoding circuit of encoder 61, the operations of frame memory group 206, motion compensating circuit 207 are respectively the same as those of frame memory 112 and motion compensating circuit 113 of encoder 61. On the basis of quantized data, motion vector, predictive mode, quantization step size, decoding is carried out. As a result, reproduction picture data is outputted from adding circuit 205.

As described above, in the conventional apparatus, coding bit rate of bit stream generated at encoder 65 is caused to be fixed in correspondence with transfer rate of transmission media 70. Under this limitation, quantity of data generated, i.e., quantization step size of quantizing circuit 106 in encoder 65 was controlled. In other words, for example, a control was conducted such that when pictures of complicated pattern are successive, quantization step size is caused to be larger to suppress quantity of data generated, while when simple patterns are successive, quantization step size is caused to be smaller to increase quantity of data generated so that buffer memory 109 does not produce overflow or underflow, thus to maintain a fixed rate.

Accordingly, in the conventional apparatus, when complicated pictures are successive, quantization step size is caused to be larger, so picture quality is deteriorated, while when simple pictures are successive, quantization step size is caused to be smaller. As a result, uniform picture quality cannot be obtained through the entirety.

In addition, in the case of recording bit stream onto a picture recording medium of a limited data capacity, in order to avoid extreme deterioration of picture quality with respect to pictures of complicated pattern, a fixed rate of high rate such that picture quality of such complicated picture is not injured must be applied to the entirety, resulting in decreased recording time.

An article published in the IEEE Transactions on Communications in 1977, USA Vol. COM-25 No: 11, pages 1285 - 1292 entitled "Adaptive Coding of Monochrome and Color Images" by Wen-Hsiung Chen et al discloses an adaptive coding system for monochrome images comprising an arrangement for dividing the images into sub blocks and then performing a two dimensional discrete Fourier transform on the sub blocks. The adaptive coding system assigns more bits to the higher energy levels and fewer bits to the lower energy levels. To this end, the coding system performs a two pass process. In the first pass a sub-block classification is performed to set up bit assignment matrices and a normalization factor is calculated which is applied in a second pass in which the normalization factor is applied to the effect of quantizing transform coefficients and encoding the data.

In an article entitled "Hardware Implementation of the Framestore and Data Rate Control for a Digital HDTV-VCR", by K. Grueneberg et al, a data rate controller for an encoding system is disclosed in which a pre-analyzer estimates a data rate of discrete cosine transform encoded video data by computing the code length of each of a plurality of macro-blocks into which each picture frame represented by the video data is divided. In accordance with the code lengths estimated by the pre-analyzer, a quantization step is fixed for a frame and the discrete cosine transform coefficients are quantized in order to meet a target data quantity, by normalizing the estimated code lengths of the macro blocks.

Various aspects and features of the present invention are defined in the appended claims.

According to a first aspect of the present invention there is provided a method of encoding source video data representing a plurality of pictures, the method comprising the steps of:

encoding said video data as a plurality of groups of pictures (GOP) each group containing at least one picture subjected to intra-field or intra-frame encoding, at least one picture subjected to forward predictive encoding and at least one picture subjected to forward or backward predictive encoding, said encoding generating first encoded data for each of said GOPs;

detecting a difficulty of encoding of each GOP by determining a data quantity of said first encoded data of each GOP, with respect to the total quantity of said first encoded data;

calculating a target data amount to be assigned to each GOP in accordance with said encoding difficulty of each GOP with respect to the sum of said encoding difficulties for said plurality of GOPs scaled by said total quantity of data that may be used, so that said target data amount is increased when a GOP is more complex and said target data amount is decreased when a GOP is more simple; and

determining from said target data amount for each GOP a quantization step size to be used to encode said GOP in combination with said predictive encoding, and encoding said source video data for each of said plurality of GOPs to generate second encoded data using said determined quantization step size assigned to each GOP.

According to a second aspect of the present invention there is provided a picture data encoding apparatus for encoding source video data, the apparatus comprising;

pre-encoding means for encoding a plurality of groups of pictures (GOP) of said source video data using a fixed quantization to generate first encoded data;
an encoding control circuit operable to detect a difficulty of encoding of each GOP by determining a data quantity of said first encoded data of each GOP, with respect to the total quantity of said first encoded data to calculate a target data amount to be assigned to each GOP in accordance with said encoding difficulty of each GOP with respect to the sum of said encoding difficulties for said plurality of GOPs so that said target data amount is increased when a GOP is more complex and said target data amount is decreased when a GOP is more simple, and to set a quantization step size based on said calculated target data amount for each of said plurality of GOPs, and
said encoding means is operable to encode said source video data for each of said plurality of GOPs to generate said second encoded data in accordance with said target data amount using said quantization step size set by said encoding control circuit.

Brief Description of the Drawings

FIG. 1 is a block diagram showing a circuit configuration of the essential part of a picture encoding apparatus to which this invention is applied.
FIG. 2 is a flowchart for explaining the operation of first encoding circuit constituting the above-mentioned picture encoding apparatus.
FIG. 3 is a flowchart for explaining the operation of second encoding circuit constituting the above-mentioned picture encoding apparatus.
FIG. 4 is a view showing respective pictures for explaining the configuration of GOP in MPEG.
FIG. 5 is a view showing respective pictures for explaining encoding control signal every GOP.
FIG. 6 is a flowchart for explaining the operation of the second encoding circuit constituting the above-mentioned picture encoding apparatus.
FIG. 7 is a view showing picture for explaining the principle of predictive encoding.
FIG. 8 is a view showing picture for explaining the principle of motion compensated predictive encoding.
FIG. 9 is a block diagram showing the configuration of picture encoding apparatus (unit) and picture decoding apparatus (unit) which are related to this invention.
FIG. 10 is a view showing the configuration of frame, macro block and slice.
FIG. 11 is a block diagram showing a circuit configuration of conventional encoder.

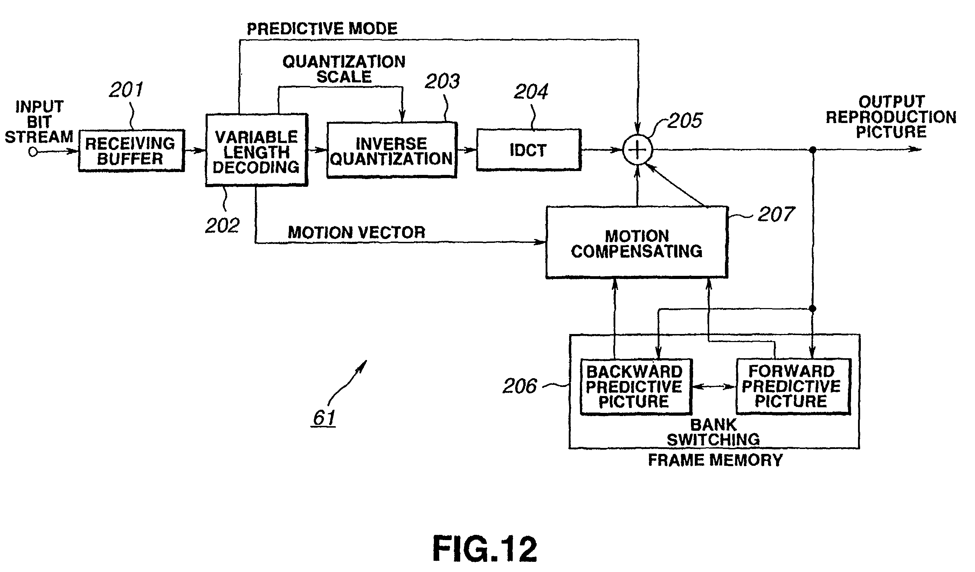

FIG. 12 is a block diagram showing a circuit configuration of conventional decoder.

Best Mode for Carrying Out the Invention

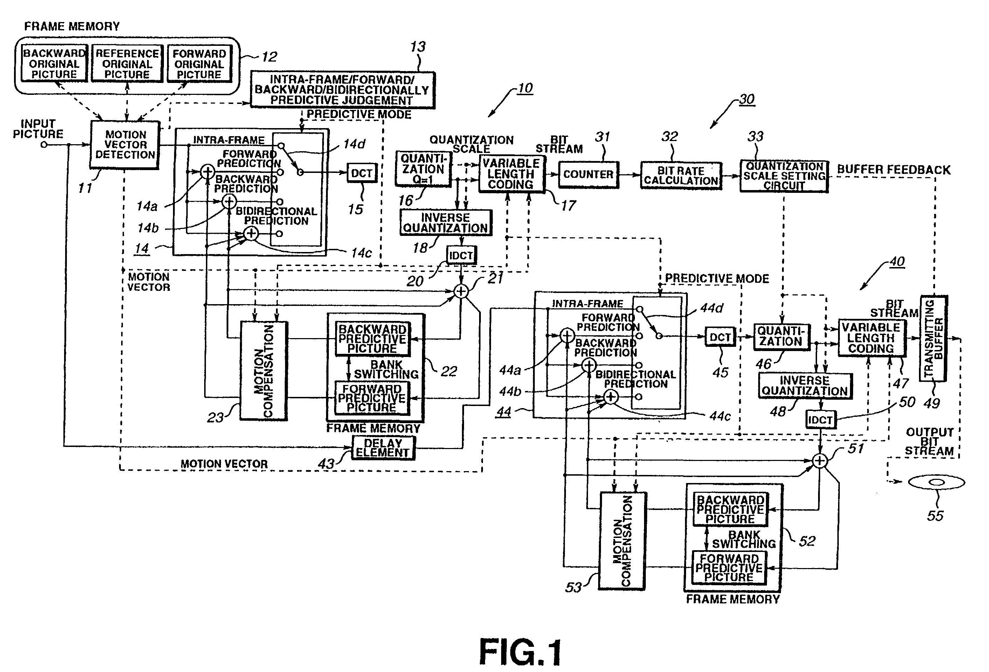

An embodiment of a picture encoding method, a picture encoding apparatus and a picture recording medium according to this invention will now be described with reference to the attached drawings.
A picture encoding apparatus to which this invention is applied comprises, as shown in FIG. 1, for example, a first encoding circuit 10 for encoding an input video signal to generate first encoded data, an encoding control circuit 30 for determining encoding rate every predetermined time on the basis of data quantity every predetermined time of the first encoded data from the first encoding circuit 10 and total quantity of usable data, and a second encoding circuit 40 for encoding the input video signal every predetermined time on the basis of the encoding rate from the encoding control circuit 30 to generate second encoded data.
More particularly, the first encoding circuit 10 comprises, as shown in the FIG. 1 mentioned above, a frame memory group 12 for storing input picture data which is input video signal, a motion vector detecting circuit 11 for detecting motion vector of input picture data from input picture data on the basis of picture data stored in the frame memory group 12, a frame memory 22 for storing predictive picture data, a motion compensating circuit 23 for implementing motion compensation to predictive picture data which has been read out from the frame memory 22 on the basis of motion vector from the motion vector detecting circuit 11, a predictive encoding circuit 14 for predictive-encoding input picture data on the basis of motion-compensated predictive picture data from the motion compensating circuit 23, a DCT circuit 15 for implementing encoding, e.g., Discrete Cosine Transform (hereinafter referred to as DCT) processing to differences, etc. which are predictive errors from the predictive encoding circuit 14 to generate coefficient data, a quantizing circuit 16 for quantizing coefficient data from the DCT circuit 15 at a fixed quantization step size to generate quantized data, a Variable Length Code (hereinafter referred to as VLC) circuit 17 for allowing quantized data from the quantizing circuit 16 to undergo variable length encoding to output variable length encoded data, an inverse quantizing circuit 18 for inverse-quantizing quantized data from the quantizing circuit 16 to reproduce coefficient data, an Inverse Discrete Cosine Transform (hereinafter referred to as IDCT) circuit 20 for implementing decoding, e.g.,

IDCT processing to coefficient data from the inverse quantizing circuit 18, and an adding circuit 21 for adding difference from the IDCT circuit 20 and motion-compensated predictive picture data from the motion compensating circuit 23 to generate predictive picture data with respect to the next input picture data to deliver the predictive picture data to the frame memory 22.

Moreover, the second encoding circuit 40 comprises, as shown in the FIG. 1 mentioned above, a delay element 43 for delaying input picture data, a frame memory 52 for storing predictive picture data, a motion compensating circuit 53 for implementing motion compensation to predictive picture data which has been read out from the frame memory 52 on the basis of motion vector from the motion vector detecting circuit 11, a predictive encoding circuit 44 for predictive-encoding input picture data delayed at the delay element 43 on the basis of the motion compensated predictive picture data from the motion compensating circuit 53, a DCT circuit 45 for implementing encoding, e.g., DCT processing to difference, etc. from the predictive encoding circuit 44 to generate coefficient data, a quantization scale setting circuit 33 for setting quantization step size on the basis of encoding rate from the encoding control circuit 30, a quantizing circuit 46 for quantizing coefficient data from the DCT circuit 45 at quantization step size from the quantization scale setting circuit 33, a VLC circuit for allowing quantized data from the quantizing circuit 46 to undergo variable length encoding to output variable length encoded data, a transmitting buffer memory 49 for temporarily storing variable length encoded data from the VLC circuit 47 to output it at a fixed bit rate, an inverse quantizing circuit 48 for inverse-quantizing quantized data from the quantizing circuit 46 to reproduce coefficient data, an IDCT circuit 50 for implementing decoding, e.g., IDCT processing to the coefficient data from the inverse quantizing circuit 48 to reproduce the difference, and an adding circuit 51 for adding difference from the IDCT circuit 50 and the motion-compensated predictive picture data from the motion compensating circuit 53 to generate predictive picture data with respect to the next input picture data to deliver the predictive picture data to the frame memory 52.

In this picture encoding apparatus, by the first encoding circuit 10, encoding processing, e.g., predictive encoding processing, DCT processing, quantization processing at fixed quantization step size and variable length encoding processing are implemented to input picture data. By encoding control circuit 30, encoding bit rate is determined on the basis of data quantity every predetermined time of variable length encoded data which is the first bit stream obtained and data capacity of picture recording medium 55, e.g., comprised of optical disc, magnetic disc or magnetic tape, etc. or total quantity of usable data determined by bit rate of transmission path (transfer rate). Thereafter, by second encoding circuit 40, predictive encoding processing, DCT processing, quantization processing and variable length encoding processing are implemented to input picture data for a second time. In generating variable length encoded data which is second bit stream, quantization is made by quantization step size based on encoding bit rate.

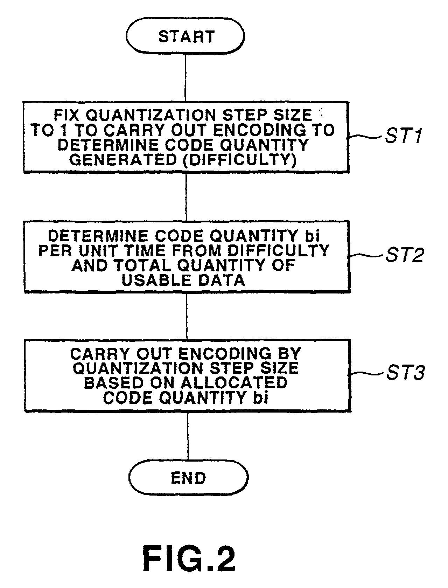

Namely, in this picture encoding apparatus, as shown in FIG. 2, for example, at step ST1, quantizing circuit 16 of first encoding circuit 10 sets quantization step size to, e.g., 1 to quantize coefficient data delivered from DCT circuit 15 to generate quantized data. Counter 31 of encoding control circuit 30 counts data quantity of variable length encoded data (first bit stream) obtained by allowing the quantized data to undergo variable length encoding every predetermined time, e.g., one frame to determine, every frame, quantity of code generated indicating difficulty of encoding.

At step ST2, bit rate calculating circuit 32 determines allocated code quantity allocated every frame on the basis of difficulty (quantity of code generated) every frame and total quantity of usable data.

At step ST3, quantizing circuit 46 of second encoding circuit 40 quantizes coefficient data delivered from DCT circuit 45 by quantization step size based on allocated code quantity to generate quantized data.

In actual terms, inputted picture data is temporarily stored into frame memory group 12. From the frame memory group 12, that picture data is read out in accordance with block format as described in the prior art.

Motion vector detecting circuit 11 reads out necessary picture data from frame memory group 12 in macro block units described above to detect motion vector. Namely, motion vector detecting circuit 11 detects, in macro block units, motion vector of current reference picture by using forward original picture and/or backward original picture stored in frame memory group 12. Here, detection of motion vector is carried out such that a motion vector in which, e.g., absolute value sum of differences between frames in macro block units becomes minimum is caused to be corresponding motion vector. The detected motion vector is delivered to motion compensating circuits 23, 53, etc., and absolute value sum of differences between frames in macro block units is delivered to intra-frame/forward/backward/ bidirectionally predictive judging circuit 13.

The intra-frame/forward/backward/bidirectionally predictive judging circuit 13 determines predictive mode on the basis of the above value to control predictive encoding circuit 14 so as to carry out switching of intra-frame/forward/backward/bidirectional prediction in block units.

The predictive encoding circuit 14 comprises, as shown in FIG. 1 mentioned above, adding circuits 14a, 14b, 14c and selecting (changeover) switch 14d. When predictive encoding mode is intra-frame encoding mode, the selecting switch 14d select input picture data itself, and when predictive encoding mode is forward/backward/bidirectionally predictive mode, it selects differences (hereinafter referred to as difference data) every pixels of input picture data with respect to respective predictive pictures. Then, the selecting switch 14d delivers selected data to DCT circuit 15.

The DCT circuit 15 implements, in block units, DCT processing to input picture data or difference data delivered from selecting switch 14d by making use of the two-dimensional correlation of video signal to deliver coefficient data thus obtained to quantizing circuit 16.

The quantizing circuit 16 quantizes coefficient data delivered from DCT circuit 15 at a fixed quantization step size, e.g., with quantization step size being set to 1 to deliver quantized data thus obtained to VLC circuit 17 and inverse quantizing circuit 18.

The VLC circuit 17 carries out variable length encoding of quantized data along with quantization step size, predictive mode, and motion vector, etc. to deliver variable length encoded data obtained to encoding control circuit 30 as a first bit stream.

The encoding control circuit 30 comprises, as shown in the FIG. 1 mentioned above, counter 31 for counting data quantity every predetermined time of variable length encoded data from the VLC circuit 17, and bit rate calculating circuit 32 for calculating (determining) allocated code quantity per unit time on the basis of data quantity from the counter 31 and total quantity of usable data. The counter 31 counts data quantity of the first bit stream every predetermined time, e.g., every one frame to determine (calculates) difficulty every frame to deliver this difficulty to bit rate calculating circuit 32.

The bit rate calculating circuit 32 calculates (determines) allocated code quantity allocated every frame, i.e., mean encoding rate every frame time on the basis of difficulty every frame and total quantity of usable data, and delivers this allocated code quantity to quantization scale setting circuit 33 of second encoding circuit 40.

In actual terms, bit rate calculating circuit 32 performs the following calculation. Namely, assuming now that the number of all frames is N, total quantity of usable data is B, difficulty of the i (i = 0, 1, 2, ··· N-1)-th frame is $d_i$, and allocated code quantity with respect to the i-th frame is $b_i$, when this allocated code quantity $b_i$ is caused to be proportional to difficulty $d_i$ as indicated by the following formula (1), data total quantity B can be calculated by adding allocated code quantities bi of all frames as indicated by the following formula (2). In the formula, a represents constant.

$$b_i = a \times d_i \qquad (1)$$

$$B = \sum_{i=0}^{N-1} b_i$$

$$= \sum_{i=0}^{N-1} a \times d_i = a \times \sum_{i=0}^{N-1} d_i \qquad \cdots (2)$$

Accordingly, constant a can be calculated by the following formula (3). When substitution of this constant a into the formula (1) is made, allocated code quantity $b_i$ with respect to the i-th frame can be calculated by the following formula (4).

$$a = \frac{B}{\sum_{i=0}^{N-1} d_i} \qquad \cdots (3)$$

$$b_i = d_i \times \left( \frac{B}{\sum_{i=0}^{N-1} d_i} \right) \qquad \cdots (4)$$

Thus, bit rate calculating circuit 32 increases allocated code quantity $b_i$ with respect to frame of picture of complicated pattern, for example, and decreases allocated code quantity $b_i$ with respect to frame of simple pattern.

On the other hand, inverse quantizing circuit 18 inverse-quantizes quantized data delivered from quantizing circuit 16 at quantization step size caused to be set to 1 to reproduce coefficient data (quantization distortion is added) corresponding to output of DCT circuit 15 to deliver that coefficient data to IDCT circuit 20.

The IDCT circuit 20 implements IDCT processing to coefficient data to reproduce input picture data corresponding to output of predictive encoding circuit 14 in the intra-frame encoding mode, and reproduces difference data in the forward/backward/bidirectionally predictive mode, thus to deliver reproduced data to adding circuit 21.

The adding circuit 21 is supplied, when predictive encoding mode is forward/backward/bidirectionally predictive mode, with motion-compensated predictive picture data from motion compensating circuit 23. The adding circuit 21 adds this predictive picture data and difference data delivered from IDCT circuit 20 to thereby reproduce picture data corresponding to input picture data.

The picture data reproduced in this way is stored into frame memory 22 as predictive picture data. Namely, inverse quantizing circuit 18 ~ adding circuit 21 constitute a local decoding circuit to locally decode quantized data outputted from quantizing circuit 16 on the basis of predictive mode to write decoded picture obtained into frame memory 22 as forward predictive picture or backward predictive picture. Frame memory 22 is composed of a plurality of frame memories. Bank switching of frame memory is carried out. In dependency upon picture to be encoded, e.g., single frame is outputted as forward predictive picture data, or is outputted as backward predictive picture data. Further, in the case of forward/backward/bidirectional prediction, forward predictive picture data and backward predictive picture data are, e.g., averaged and the averaged data is outputted. These predictive picture data are entirely the same picture data as picture data reproduced by picture decoding apparatus which will be described later. Picture to be processed next is caused to undergo forward/backward/bidirectionally encoding on the basis of this predictive picture.

The operation of second encoding circuit 40 will now be described. It is to be noted that since circuits except for quantization scale setting circuit 33, delay element 43, quantizing circuit 46, and transmitting buffer 49 constituting second encoding circuit 40 perform the same operations as those of circuits constituting the above-described first encoding circuit 10, their explanation is omitted.

Delay element 43 delays input picture data, e.g., by time until encoding control signal is outputted from encoding control circuit 30. Then, at predictive encoding circuit 44 and DCT circuit 45, predictive encoding processing and DCT processing which are in accordance with predictive mode delivered from intra-frame/forward/backward/bidirectionally predictive judging circuit 13 are implemented to the delayed input picture data. Thus, coefficient data is generated.

Quantization scale setting circuit 33 determines (calculates) allocated code quantity every macro block (e.g., value obtained by dividing allocated code quantity every frame by the number of macro blocks in one frame) from delivered allocated code quantity every frame to carry out comparison between code quantity generated in a macro block which is detected from buffer feedback from transmitting buffer 49 and allocated code quantity every macro block. The quantization scale setting circuit 33 operates as follows so as to allow encoding bit rates of respective frames to become close to set mean encoding bit rate every frame time. Namely, in the case where code quantity generated in corresponding macro block is greater than allocated code quantity every macro block, the circuit 33 sets quantization step size of next macro block to a greater value in order to suppress code quantity generated by the next macro block. In contrast, in the case where code quantity generated in corresponding macro block is smaller than allocated code quantity every macro block, the circuit 33 sets quantization step size of next macro block to a smaller value so as to increase code quantity generated. It should be noted that quantization scale setting circuit 33 is operative so that in the case where buffer feedback from transmitting buffer 49 indicates that transmitting buffer 49 is in a state close to overflow state, it allows quantization step size to be larger to suppress overflow irrespective of comparison result between the allocated code quantity and code quantity generated, while in the case where buffer feedback from the transmitting buffer 49 indicates that transmitting buffer 49 is in a state close to underflow state, it allows quantization step to be smaller to suppress underflow irrespective of comparison result between the allocated code quantity and code quantity generated. While it has been described that comparison between code quantity generated and allocated code quantity is made every macro block to switch quantization step size every macro block, such switch may be carried out every slice. While it has been described that code quantity generated is detected from storage quantity of transmitting buffer 49, it may be directly obtained from output of variable length encoding circuit 47. The quantization scale setting circuit 33 delivers quantization step size set in this way to quantizing circuit 46.

The quantizing circuit 46 quantizes coefficient data delivered from DCT circuit 45 by quantization step size delivered from the above-described quantization scale setting circuit 33 to generate quantized data.

VLC circuit 47 allows quantized data delivered from quantizing circuit 46 to undergo variable length encoding along with quantization step size from quantization scale setting circuit 33, predictive mode from intra-frame/forward/backward/ bidirectionally predictive judging circuit 13, and motion vector from motion vector detecting circuit 11, etc. to deliver variable length encoded data obtained to transmitting buffer memory 49 as a second bit stream.

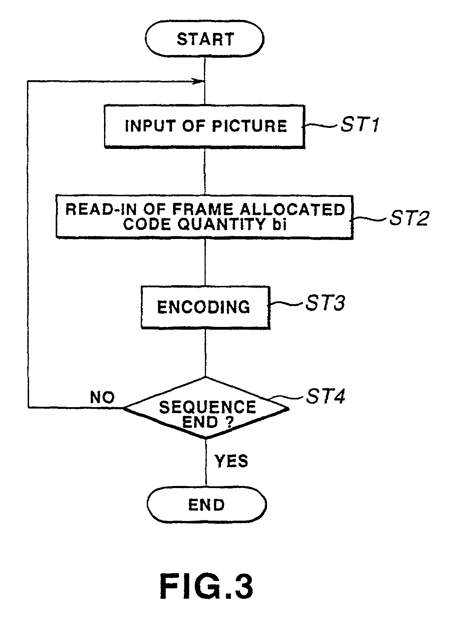

Namely, in this picture encoding apparatus, as shown in FIG. 3, for example, when picture data is inputted through delay element 43 at step ST1, quantization scale setting circuit 33 reads in, from encoding control circuit 30, allocated code quantity with respect to frame to be currently encoded at step ST2, then, the processing operation proceeds to step ST3.

At step ST3, predictive encoding circuit 44 ~ VLC circuit 47 implement predictive encoding processing and DCT processing to picture data, and quantizes coefficient data by quantization step size based on allocated code quantity thereafter to allow it to undergo variable length encoding. Then, the processing operation proceeds to step ST4.

At the step ST4, whether or not encoding processing has been completed with respect to all frames (sequence) to which, e.g., the same picture size or the same transfer rate is applied is judged. If so, the processing is completed. In contrast, if not so, the processing operation returns to step ST1. Thus, variable rate encoding such that encoding rate changes in frame units is realized. Accordingly, even if pictures (frames) of complicated pattern are successive, there is no possibility that quantization step size is caused to be large with respect to these pictures as in the conventional apparatus. Thus, uniform high picture quality can be obtained through the entirety.

The transmitting buffer memory 49 temporarily stores variable length encoded data thereafter to read out it at a fixed bit rate to thereby smooth the variable length encoded data to output it as bit stream. The bit stream which has been outputted from transmitting buffer 49 is multiplexed along with, e.g., encoded audio signal, synchronizing signal, etc. Further, code for error correction is added thereto, and a predetermined modulation suitable for transmission or recording is applied thereto. Thereafter, bit stream thus processed is transmitted to picture decoding apparatus through, e.g., transmission path, or is recorded onto picture recording medium 55 comprised of optical disc, magnetic disc or magnetic tape, etc. as shown in the FIG. 1 mentioned above. Namely, since, in the second encoding circuit 40, there is carried out a variable rate encoding such that, e.g., allocated code quantity $b_i$ is increased in advance with respect to complicated picture and allocated code quantity $b_i$ is decreased with respect to simple picture, there is no necessity of applying a fixed rate of high rate through the entirety in order to avoid extreme deterioration of picture quality with respect to pictures of complicated pattern as in the case of conventional apparatus. Thus, recording time of picture recording medium 55 can be prolonged.

On the other hand, inverse quantizing circuit 48 inverse-quantizes quantized data delivered from quantizing circuit 46 by quantization step size used in the above-described quantizing circuit 46 to reproduce coefficient data (quantization distortion is added) corresponding to output of DCT circuit 45 to deliver this coefficient data to IDCT circuit 50. Namely, inverse quantizing circuit 48 ~ adding circuit 51 constituting a local decoding circuit locally decode quantized data outputted from quantizing circuit 46 to write decoded picture obtained into frame memory 52 as forward predictive picture or backward predictive picture. Picture data stored in frame memory 52 is used as predictive picture for picture to be processed next.

Meanwhile, while, in the above-described emboidment, allocated code quantity per predetermined time, i.e., mean encoding rate per predetermined time is obtained every frame with frame being used as predetermined time, this invention is not limited to such an implementation. For example, GOP (Group of Pictures in so called MPEG (Moving Picture Expert Group) may be used as a predetermined time. It should be noted that the above-described MPEG is general name of the moving picture encoding system being studied in WG (Working Group) 11 of SC (Sub Committee) 29 in JTC (Joint Technical Committee) of so called ISO (International Standardization Organization) and IEC (International Electrotechnical Committee).

Namely, GOP in MPEG consists of at least one so called I picture, and a plurality of P pictures or B pictures (non-I picture). In a more practical sense, assuming that GOP consists of a single I picture, four P pictures having a period of 3 pictures, and ten B pictures, encoding control circuit 30 determines allocated code quantity every GOP. Here, I picture is picture to be subjected to intra-field or intra-frame encoding. P picture is picture which can be predicted only from forward direction, and is subjected to interfield or intra-frame encoding. B picture is picture which can be predicted from forward direction, from back ward direction and from both directions and is subjected to interfield or intra-frame encoding.

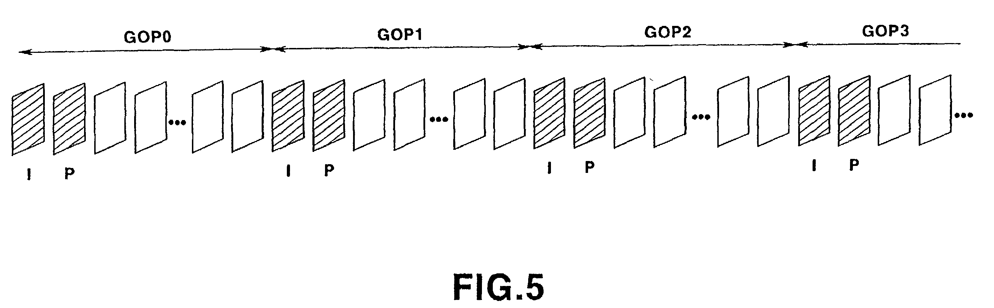

When it is assumed, as shown in FIG. 5, for example, that successive arbitrary two pictures within GOP having the number of pictures constituting GOP as period are I picture and P picture, and quantization step size is, e.g., 1, the first encoding circuit 10 implements predictive encoding processing, DCT processing, and variable length encoding processing to picture data of these I and P pictures to generate variable length encoded data to deliver the variable length encoded data to encoding control circuit 30. The reason why two pictures are used as I picture, P picture is to examine complexity of pattern and correlation between frames. From code quantity generated of I picture, it is possible to recognize complexity of pattern. From code quantity generated of P picture, it is possible to recognize correlation between frames. Since successive plural frames have similar pictorial images in general, it is possible to recognize tendency of pattern of GOP even from extracted two pictures.

Encoding control circuit 30 counts (calculates), every GOP, data quantity of I picture bit $I_j$ and data quantity of P picture bit Pj, and determines, every GOP, difficulty (code quantity generated GOP $d_j$ ($j = 0, 1, 2 \cdots$) on the basis of these data quantities bit $I_j$, bit $P_j$ and the number N of P pictures constituting GOP as indicated by the following formula (5), for example.

$$GOPd_i = bitI_j + N \times bitP_j \qquad (5)$$

The encoding control circuit 30 determines allocated code quantity allocated every GOP on the basis of difficulty (code quantity generated) GOP dj every GOP and total quantity of usable data, and delivers this allocated code quantity to second encoding circuit 40.

In actual terms, when the number of GOPs is assumed to be M, total quantity of usable data is assumed to be B, allocated code quantity with respect to the j-th GOP is GOP $b_j$, and this allocated code quantity GOP bj is caused to be in proportion to difficulty as indicated by the following formula (6), data total quantity B is determined by adding allocated code quantities GOP $b_j$ of all GOPs as indicated by the following formula (7). In the formula (6), a is constant.

$$GOPb_j = a \times GOPd_j \qquad (6)$$

$$B = \sum_{j=0}^{M-1} GOPb_j$$

Accordingly, constant a can be determined by the following formula (8). Substituting this constant a into the formula (6),

$$= \sum_{j=0}^{M-1} \times GOPd_j = a \times \sum_{j=0}^{M-1} GOPd_j \qquad \cdots (7)$$

allocated code quantity $GOPb_j$ with respect to the j-th GOP can be determined by the following formula (9).

$$a = \frac{B}{\sum_{j=0}^{M-1} GOPd_j} \qquad \cdots (8)$$

$$GOPb_j = GOPd_j \times \left( \frac{B}{\sum_{j=0}^{M-1} GOPd_j} \right) \qquad \cdots (9)$$

Thus, encoding control circuit 30 increases allocated code quantity GOP $b_j$ with respect to, e.g., GOP in which pictures of complicated pattern are included or having low correlation between frames, and decreases allocated code quantity GOP $b_j$ with respect to GOP in which pictures of simple pattern are included or having high correlation between frames.

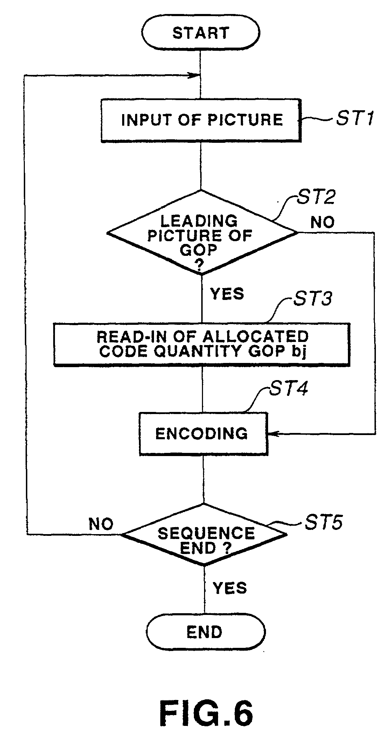

When second encoding circuit 40 is supplied with picture data through delay element 43 at step ST1, as shown in FIG. 6, for example, it judges whether or not picture data being inputted is the leading picture of GOP. If so, the processing operation proceeds to step ST3. If not so, the processing operation proceeds to step ST4.

At step ST3, second encoding circuit 40 reads in allocated code quantity with respect to GOP currently subjected to encoding from encoding control circuit 30. Then, the processing operation proceeds to step ST4.

At the step ST4, second encoding circuit 40 implements predictive encoding processing and DCT processing, and quantizes coefficient data by quantization step size based on allocated code quantity thereafter to allow it to undergo variable length encoding. Then, the processing operation proceeds to step ST5.

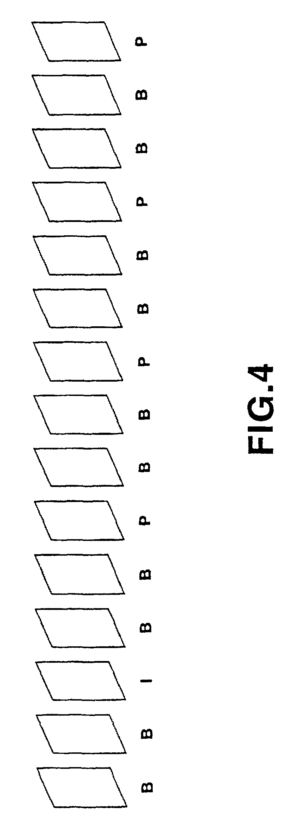

Here, quantization scale setting circuit 33 sets allocated code quantity every frame from delivered allocated code quantity every GOP by taking into consideration picture type (I picture, P picture, B picture) in actual encoding, e.g., picture type shown in FIG. 4. In a more practical sense, allocated code quantity with respect to I picture is increased, allocated code quantity with respect to B picture is decreased, and allocated code quantity with respect to P picture is caused to be intermediate therebetween.

At the subsequent step ST5, whether or not encoding processing has been completed with respect to all frames (sequence) to which the same picture size or the same transfer rate is applied is judged. If so, the processing is completed. In contrast, if not so, the processing operation returns to step ST1. Thus, a variable rate encoding such that encoding rate changes every GOP is realized. Even if pictures (frames) of complicated pattern are successive, there is no possibility that quantization step size is caused to be large with respect to these pictures as in the conventional apparatus. As a result, it is possible to obtain uniform high picture quality over the entirety. Further, since allocated code quantity every GOP is determined on the basis of two pictures in this embodiment, higher speed processing can be carried out as compared to the above-described emboidment. It is to be noted that it is a matter of course to determine allocated code quantities of respective GOPs on the basis of data quantities of all pictures within GOP.

It should be noted that this invention is not limited to the above-described embodiments. While, e.g., transform coding employs DCT in the above-described embodiments, so called Strato transform, Haar transform or Wavelet transform, etc. may be employed.

Industrial Applicability

As is clear from the foregoing description, this invention employs a scheme to allow an input video signal to undergo encoding, e.g., predictive encoding, DCT processing, quantization at fixed quantization step size and variable length encoding to generate first encoded data to determine (calculate) allocated code quantity every frame or every GOP on the basis of data quantity every predetermined time, e.g., every frame or every GOP of the first encoded data and total quantity of usable data to encode the input video signal every predetermined time on the basis of the allocated code quantity to generate second encoded data. Thus, variable rate encoding such that encoding rate changes every predetermined time is realized. As a result, even if pictures (frames) of complicated are successive, there is no possibility that quantization step size is caused to be large with respect to these pictures as in the conventional apparatus. Thus, uniform high picture quality can be obtained over the entirety.

Further, since second encoded data obtained in a manner as described above has variable rate, in the case where such encoded data is recorded onto picture recording media, limited memory capacity can be effectively used, and recording time of picture recording media can be prolonged. In addition, picture data of high picture quality uniform through the entirety can be reproduced from the picture recording media.

## Claims

**1.** A method of encoding source video data representing a plurality of pictures, the method comprising the steps of:

encoding said video data as a plurality of groups of pictures (GOP) each group containing at least one picture subjected to intra-field or intra-frame encoding, at least one picture subjected to forward predictive encoding and at least one picture subjected to forward or backward predictive encoding, said encoding generating first encoded data for each of said GOPs;
detecting a difficulty of encoding (GOPdj) of each GOP by determining a data quantity of said first encoded data of each GOP, with respect to the total quantity of said first encoded data;
calculating a target data amount to be assigned to each GOP (GOPbj) in accordance with said encoding difficulty of each GOP (GOPdj) with respect to the sum of said encoding difficulties for said plurality of GOPs scaled by said total quantity of data that may be used, so that said target data amount is increased when a GOP is more complex and said target data amount is decreased when a GOP is more simple; and
determining from said target data amount for each GOP a quantization step size to be used to encode said GOP in combination with said predictive encoding, and encoding said source video data for each of said plurality of GOPs to generate second encoded data using said determined quantization step size assigned to each GOP.

**2.** A method as claimed in Claim 1, wherein said target data amount (GOPbj) to be assigned to each GOP is determined from the following equation:

$$GOP_bj = B \times GOP_dj / \sum_{j=0}^{M-1} GOP_dj$$

where

"M" indicates the number of said GOPs,
"j" indicates an integer (j = 0, 1, 2, ......., M-1),
"GOP_bj" indicates said target data amount of the j-th picture,
"B" indicates said available data amount corresponding to said GOPs on the basis of a transmission bit rate, and
"GOP_dj" indicates said difficulty data of the j-th GOP.

**3.** A method of encoding source video data as claimed in claims 1 or 2, wherein said encoding difficulty (GOPdj)of each GOP is determined from said amount of said first encoded data in combination with a picture type of each picture of each of said plurality of GOPs.

**4.** A method of encoding source video data as claimed in claim 3, wherein the step of determining said encoding difficulty (GOPdj) of each GOP from said amount of said first encoded data in combination with the picture type, comprises the steps of;

determining for each of said plurality of GOPs a data amount of intra-coded type pictures (Ij) and a data amount of said forward predictive encoded pictures (Pj);
determining the number of intra-coded pictures (I) and the number of forward predictive encoded pictures for each of said GOPs, and
calculating the encoding difficulty for each of said GOPs from the data amounts for the forward predictive and intra-coded pictures in combination with the numbers of intra-coded and forward predictive encoded pictures.

**5.** A method of encoding source video data as claimed in Claim 4, wherein the step of calculating the encoding difficulty for each of said GOPs is determined in accordance with the following formula:

$$GOPdj = bit\ Ij + N \times bit\ Pj$$

where

"GOPdj" is the difficulty data for the j-th GOP,
"bitIj" is the data amount of the intra-coded picture type (Ij) of the j-th GOP,
"N" is the number of inter-coded pictures, and
"bit Pj" is the data amount of the predictive inter-coded picture type of the j-th GOP.

**6.** A picture data encoding apparatus for encoding source video data, the apparatus comprising:

pre-encoding means (10) for encoding a plurality of groups of pictures (GOP) of said source video data using a fixed quantization to generate first encoded data,
an encoding control circuit (30) operable to detect a difficulty of encoding (GOPdj) of each GOP by determining a data quantity of said first encoded data of each GOP, with respect to the total quantity of said first encoded data, to calculate a target data amount (GOPdj) to be assigned to each GOP (GOPbj) in accordance with said encoding difficulty of each GOP (GOPdj) with respect to the sum of said encoding difficulties for said plurality of GOPs so that said target data amount is increased when a picture included in said GOP is more complex and said target data amount is decreased when a GOP is more simple, and to set a quantization step size based on said calculated target data amount for each of said plurality of GOPs, and
said encoding means (40) is operable to encode said source video data for each of said plurality of GOPs to generate said second encoded data in accordance with said target data amount using said quantization step size set by said encoding control circuit (30).

**7.** A picture data encoding apparatus as claimed in Claim 6, wherein said encoding control circuit (30) is operable to determine the difficulty data (GOPdj) of each GOP from said amount of said first encoded data in combination with a picture type of each picture of each of said plurality of GOPs.

**8.** A picture data encoding apparatus as claimed in Claim 7, wherein said encoding control circuit (30) determines the difficulty data (GOPdj) of each GOP by

determining for each of said plurality of GOPs a data amount of intra-coded type pictures (Ij) and a data amount of forward predictive encoded type pictures (Pj);
determining the number of intra-coded pictures (I) and forward predictive encoded pictures (P) for each of said GOPs, and
calculating the difficulty data for each of said GOPs from the data amounts for the intra-coded and the forward predictive encoded pictures in combination with the numbers of intra-coded and forward predictive encoded pictures.

**9.** A picture encoding apparatus as claimed in Claim 8, wherein said encoding control circuit (30) is operable to calculate said encoding difficulty for each of said GOPs in accordance with the following formula:

$$GOPdj = bit\ Ij + N \times bit\ Pj$$

where

"GOPdj" is the difficulty data for the j-th GOP,
"bitIj" is the data amount of the intra-coded type pictures (Ij) of the j-th GOP,
"N" is the number of inter-coded pictures,
"bit Pj" is the data amount of the predictive inter-coded type pictures of the j-th GOP.

**10.** A picture encoding apparatus as claimed in Claim 6, wherein said encoding control circuit (30) is operable to determined the target amount for each GOP from the following equation:

$$GOP_bj = B \times GOP_dj \Big/ \sum_{j=0}^{M-1} GOP_dj$$

where

"M" indicates the number of said GOPs,
"j" indicates an integer (j = 0, 1, 2, ......., M-1),
"GOP_bj" indicates said target data amount of the j-th picture,
"B" indicates the data amount corresponding to said GOPs on the basis of a transmission bit rate, and
"GOP_dj" indicates said difficulty data of the j-th GOP.

## Patentansprüche

**1.** Verfahren zum Kodieren von Quell-Videodaten, die eine Vielzahl von Bildern repräsentieren, welches Verfahren Schritte umfasst zum

Kodieren der Videodaten als eine Vielzahl von Gruppen von Bildern (GOPs), wobei jede Gruppe enthält: zumindest ein Bild, das einer Intra-Teilbild- oder Intra-Vollbild-Kodierung unterzogen wurde, zumindest ein Bild, das einer Vorwärts-Prädiktions-Kodierung unterzogen wurde, und zumindest ein Bild, das einer Vorwärts- oder Rückwärts-Prädiktions-Kodierung unterzogen wurde, welche Kodierung erste kodierte Daten für jede der Gruppen von Bildern erzeugt,
Erfassen einer Kodierungsschwierigkeit (GOPdj) in jeder Gruppe von Bildern durch Bestimmen einer Datenmenge der ersten kodierten Daten jeder Gruppe von Bildern in bezug auf die Gesamtmenge der ersten kodierten Daten,
Berechnen einer Ziel-Datenmenge, die jeder Gruppe von Bildern (GOPbj) in Übereinstimmung mit der Kodierungsschwierigkeit in jeder Gruppe von Bildern (GOPdj) in bezug auf die Summe der Kodierungsschwierigkeiten in der Vielzahl von Gruppen von Bildern gemessen an der Gesamtmenge von Daten, die gebraucht werden kann, derart zuzuweisen ist, dass die Ziel-Datenmenge erhöht wird, wenn eine Gruppe von Bildern komplexer ist, und die Ziel-Datenmenge herabgesetzt wird, wenn eine Gruppe von Bildern einfacher ist, und
Bestimmen einer Quantisierungsschrittgröße aus der Ziel-Datenmenge für jede Gruppe von Bildern, die gebraucht wird, um die Gruppe von Bildern in Kombination mit der Prädiktions-Kodierung zu kodieren, und Kodieren der Quell-Videodaten für jede der Vielzahl von Gruppen von Bildern, um zweite kodierte Daten unter Benutzung der bestimmten Quantisierungsschrittgröße, die jeder Gruppe von Bildern zugewiesen ist, zu erzeugen.

**2.** Verfahren nach Anspruch 1, wobei die Ziel-Datenmenge (GOPbj), die jeder Gruppe von Bildern zuzuweisen ist, aus der Gleichung

$$GOP_bj = B \times GOP_dj / \sum_{j=0}^{M-1} GOP_dj$$

bestimmt wird, wobei

"M" die Anzahl der Gruppen von Bildern angibt,
"j" eine ganze Zahl (j = 0, 1, 2, ..., M-1) angibt,
"GOP_bj" die Ziel-Datenmenge des j-ten Bildes angibt,
"B" die verfügbare Datenmenge entsprechend den Gruppen von Bildern auf der Grundlage einer Übertragungs-Bitrate angibt und
"GOP_dj" die Schwierigkeitsdaten der j-ten Gruppe von Bildern angibt.

**3.** Verfahren zum Kodieren von Quell-Videodaten nach Anspruch 1 oder 2, wobei die Kodierungsschwierigkeit (GOPdj) jeder Gruppe von Bildern aus der Menge der ersten kodierten Daten in Kombination mit dem Bildtyp jedes Bildes jeder der Vielzahl von Gruppen von Bildern bestimmt wird.

**4.** Verfahren zum Kodieren von Quell-Videodaten nach Anspruch 3, wobei der Schritt zum Bestimmen der Kodierungsschwierigkeit (GOPdj) jeder Gruppe von Bildern aus der Menge der ersten kodierten Daten in Kombination mit dem Bildtyp Schritte umfasst zum

Bestimmen einer Datenmenge von intra-kodierten Bildern (Ij) und einer Datenmenge der vorwärtsprädiktiv-kodierten Bilder (Pj) für jede der Vielzahl von Gruppen von Bildern,
Bestimmen der Anzahl von intra-kodierten Bildern (I) und der Anzahl von vorwärtsprädiktiv-kodierten Bildern für jede der Gruppen von Bildern und
Berechnen der Kodierungsschwierigkeit für jede der Gruppen von Bildern aus den Datenmengen für die vorwärtsprädiktiv- und intra-kodierten Bilder in Kombination mit den Anzahlen der intra-kodierten und vorwärtsprädiktiv-kodierten Bilder.

**5.** Verfahren zum Kodieren von Quell-Videodaten nach Anspruch 4, wobei der Schritt zum Berechnen der Kodierungsschwierigkeit für jede der Gruppen von Bildern in Übereinstimmung mit der Formel

$$GOPdj = bit\ Ij + N \times bit\ Pj$$

bestimmt wird, wobei

"GOPdj" die Schwierigkeitdaten für die j-te Gruppe von Bildern sind,
"bitIj" die Datenmenge des intra-kodierten Bildtyps (Ij) der j-ten Gruppe von Bildern ist,
"N" die Anzahl von inter-kodierten Bildern ist und
"bit Pj" die Datenmenge des prädiktiv inter-kodierten Bildtyps der j-ten Gruppe von Bildern ist.

**6.** Bilddaten-Kodierungsvorrichtung zum Kodieren von Quell-videodaten, welche Vorrichtung umfasst:

ein Vor-Kodierungsmittel (10) zum Kodieren einer Vielzahl von Gruppen von Bildern (GOP) der Quell-Videodaten unter Benutzung einer festen Quantisierung, um erste kodierte Daten zu erzeugen,
eine Kodierungssteuerschaltung (30), die betreibbar ist, um eine Kodierungsschwierigkeit (GOPdj) jeder Gruppe von Bildern durch Bestimmen einer Datenmenge der ersten kodierten Daten jeder Gruppe von Bildern in bezug auf die Gesamtmenge der ersten kodierten Daten zu erfassen, um eine Ziel-Datenmenge (GOPdj), die jeder Gruppe von Bildern (GOPdj) in Übereinstimmung mit der Kodierungsschwierigkeit jeder Gruppe von Bildern (GOPdj) in bezug auf die Summe der Kodierungsschwierigkeiten in der Vielzahl von Gruppen von Bildern zuzuweisen ist, derart zu berechnen, dass die Ziel-Datenmenge erhöht wird, wenn ein Bild, das in der Gruppe von Bildern enthalten ist, komplexer ist, und die Ziel-Datenmenge herabgesetzt wird, wenn eine Gruppe von Bildern einfacher ist, und um eine Quantisierungsschrittgröße auf der Grundlage der berechneten Ziel-Datenmenge für jede der Vielzahl von Gruppen von Bildern zu setzen,

wobei ein Kodierungsmittel (40) betreibbar ist, um die Quell-Videodaten für jede der Vielzahl von Gruppen von Bildern zu kodieren, um die zweiten kodierten Daten in Übereinstimmung mit der Ziel-Datenmenge unter Benutzung der Quantisierungsschrittgröße, die durch die Kodierungssteuerschaltung (30) gesetzt ist, zu erzeugen.

**7.** Bilddaten-Kodierungsvorrichtung nach Anspruch 6, wobei die Kodierungssteuerschaltung (30) betreibbar ist, um die Schwierigkeitsdaten (GOPdj) jeder Gruppe von Bildern aus der Menge der ersten kodiert Daten in Kombination mit einem Bildtyp jedes Bildes jeder der Vielzahl von Gruppen von Bilden zu bestimmen.

**8.** Bilddaten-Kodierungsvorrichtung nach Anspruch 7, wobei die Kodierungssteuerschaltung (30) die Schwierigkeitsdaten (GOPdj) jeder Gruppe von Bildern bestimmt durch

Bestimmen einer Datenmenge von intra-kodierten Bildern (Ij) und einer Datenmenge von vorwärtsprädiktiv-kodierten Bildern (Pj) für jede der Vielzahl von Gruppen von Bildern,
Bestimmen der Anzahl von intra-kodierten Bildern (I) und vorwärtsprädiktiv-kodierten Bildern (P) für jede der Gruppen von Bildern und
Berechnen der Schwierigkeitsdaten für jede der Gruppen von Bildern aus den Datenmengen für die intra-kodierten und die vorwärtsprädiktiv-kodierten Bilder in Kombination mit den Anzahlen von intra-kodierten und vorwärtsprädiktiv-kodierten Bildern.

**9.** Bilddaten-Kodierungsvorrichtung nach Anspruch 8, wobei die Kodierungssteuerschaltung (30) betreibbar ist, um die Kodierungsschwierigkeit für jede der Gruppen von Bildern in Übereinstimmung mit der Formel

$$GOPdj = bit\ Ij + N \times bit\ Pj$$

zu berechnen, wobei

"GOPdj" die Schwierigkeitsdaten für die j-te Gruppe von Bildern sind,
"bitIj" die Datenmenge der intra-kodierten Bilder (Ij) der j-ten Gruppe von Bildern ist,
"N" die Anzahl von inter-kodierten Bildern ist und
"bit Pj" die Datenmenge der prädiktiv inter-kodierten Bilder der j-ten Gruppe von Bildern ist.

**10.** Bilddaten-Kodierungsvorrichtung nach Anspruch 6, wobei die Kodierungssteuerschaltung (30) betreibbar ist, um die Ziel-Datenmenge für jede Gruppe von Bildern aus der Gleichung

$$GOP_bj = B \times GOP_dj / \sum_{j=0}^{M-1} GOP_dj$$

zu bestimmen, wobei

"M" die Anzahl der Gruppen von Bildern angibt,
"j" eine ganze Zahl (j = 0, 1, 2 ... , M-1) angibt,

"GOP_bj" die Ziel-Datenmenge des j-ten Bildes angibt,
"B" die Datenmenge entsprechend den Gruppen von Bildern auf der Grundlage einer Übertragungs-Bitrate angibt und
"GOP_dj" die Schwierigkeitsdaten der j-ten Gruppe von Bildern angibt.

## Revendications

**1.** Procédé de codage de données vidéo de source représentant une pluralité d'images, le procédé comprenant les étapes de :

codage desdites données vidéo comme une pluralité de groupes d'images (GOP) chaque groupe contenant au moins une image soumise à un codage intra-trame ou intra-image, au moins une image soumise à un codage prédictif proactif et au moins une image soumise à un codage prédictif proactif ou rétroactif, ledit codage générant des premières données codées pour chacun desdits GOP ;
détection d'une difficulté de codage (GOPdj) de chaque GOP en déterminant une quantité de données desdites premières données codées de chaque GOP, par rapport à la quantité totale desdites premières données codées ;
calcul d'une quantité de données de cible à assigner à chaque GOP (GOPbj) selon ladite difficulté de codage de chaque GOP par rapport à la somme desdites difficultés de codage pour ladite pluralité de GOP pondérée par ladite quantité totale de données qui peuvent être utilisées, pour que ladite quantité de données de cible soit augmentée lorsqu'un GOP est plus complexe et ladite quantité de données de cible soit diminuée lorsqu'un GOP est plus simple ; et
détermination à partir de ladite quantité de données de cible de chaque GOP d'une dimension d'étape de quantification à utiliser pour coder ledit GOP en combinaison avec ledit codage prédictif, et pour coder lesdites données vidéo de source pour chacune de ladite pluralité de GOP pour générer des secondes données codées en utilisant ladite dimension de pas de quantification déterminée assignée à chaque GOP.

**2.** Procédé selon la revendication 1, dans lequel ladite quantité de données de cible (GOPbj) à assigner à chaque GOP est déterminée à partir de l'équation suivante :

$$GOP_bj = B \times GOP_dj \;/ \sum_{j=0}^{M-1} GOP_dj$$

où

"M" indique le nombre desdits GOP,
"j" indique un entier (j = 0, 1, 2, ......, M-1),
"GOP_bj" indique ladite quantité de données de cible de la $j^{ième}$ image,
"B" indique ladite quantité de données disponible correspondant auxdits GOP sur la base d'un débit binaire de transmission, et
"GOP_dj" indique lesdites données de difficulté du $j^{ième}$ GOP.

**3.** Procédé de codage des données vidéo de source selon la revendication 1 ou 2, dans lequel ladite difficulté de codage (GOPdj) de chaque GOP est déterminée à partir de ladite quantité desdites premières données codées en combinaison avec un type d'image de chaque image de chacune de ladite pluralité de GOP.

**4.** Procédé de codage de données vidéo de source selon la revendication 3, dans lequel l'étape de détermination de ladite difficulté de codage (GOPdj) de chaque GOP de ladite quantité desdites premières données codées en combinaison avec le type d'image, comprend les étapes de :

détermination pour chacune de ladite pluralité de GOP d'une quantité de données d'images de type intra-codées (Ij) et une quantité de données desdites images codées prédictives proactives (Pj) ;
détermination du nombre d'images intra-codées (I) et du nombre d'images codées prédictives proactives pour chacun desdits GOP, et
calcul des difficultés de codage pour chacun desdits GOP à partir des quantités de données pour les images prédictives proactives et intra-codées en combinaison avec les nombres d'images codées prédictives intra-codées et proactives.

**5.** Procédé de codage de données vidéo de source selon la revendication 4, dans lequel l'étape de calcul de la difficulté de codage pour chacun desdits GOP est déterminée selon la formule suivante :

$$GOPdj = bit\ Ij + N \times bit\ Pj$$

où

"GOPdj" indique les données de difficulté pour le $j^{ème}$ GOP,
"bitIj" indique la quantité de données du type d'image intra-codée (Ij) du $j^{ème}$ GOP,
"N" indique le nombre d'images intra-codées, et
"bit Pj" indique la quantité de données du type d'image inter-codée prédictive du $j^{ème}$ GOP.

**6.** Appareil de codage de données d'image pour coder des données vidéo de source , l'appareil comprenant :

un moyen de précodage (10) pour coder une pluralité de groupes d'images de (GOP) desdites données vidéo de source en utilisant une quantification fixe pour générer des premières données codées,
un circuit de commande de codage (30) utilisable pour détecter une difficulté de codage (GOPdj) de chaque GOP en déterminant une quantité de données desdites premières données codées de chaque GOP, par rapport à la quantité totale desdites premières données codées, pour calculer une quantité de données de cible (GOPdj) à assigner à chaque GOP (GOPbj) selon ladite difficulté de codage de chaque GOP par rapport à la somme desdites difficultés de codage pour ladite pluralité de GOP pour que ladite quantité de données de cible soit augmentée lorsqu'un GOP est plus complexe et ladite quantité de données de cible soit diminuée lorsqu'un GOP est plus simple, et pour mettre une dimension de pas de quantification sur la base de ladite quantité de données de cible calculée pour chacun de ladite pluralité de GOP, et
ledit moyen de codage (40) est utilisable pour coder lesdites données vidéo de source pour chacune de ladite pluralité de GOP pour générer lesdites secondes données codées selon ladite quantité de données de cible en utilisant ladite dimension de pas de quantification réglée par ledit circuit de commande de codage (30).

**7.** Appareil de codage de données d'image selon la revendication 6, dans lequel ledit circuit de commande de codage (30) est utilisable pour déterminer les données de difficulté (GOPdj) de chaque GOP à partir de ladite quantité desdites premières données codées en combinaison avec un type d'image de chaque image de chacune de ladite pluralité de GOP.

**8.** Appareil de codage de données d'image selon la revendication 7, dans lequel ledit circuit de commande de codage (30) détermine les données de difficulté (GOPdj) de chaque GOP par

une détermination pour chacune de ladite pluralité de GOP d'une quantité de données d'image de type intra-codé (Ij) et de quantité de données des images de type codé prédictive proactive (Pj) ;
une détermination du nombre d'images intra-codées (I) et des images codées prédictives proactives (P) pour chacun desdits GOP, et
un calcul des données de difficulté pour chacun desdits GOP à partir des quantités de données pour les images codées prédictives intra-codées et proactives en combinaison avec les nombres d'images codées prédictives intra-codées et proactives.

**9.** Appareil de codage d'image selon la revendication 8, dans lequel ledit circuit de commande de codage (30) est utilisable pour calculer ladite difficulté de codage pour chacun desdits GOP selon la formule suivante :

$$GOPdj = bit\ Ij + N \times bit\ Pj$$

où

"GOPdj" indique les données de difficulté pour le $j^{ème}$ GOP,
"bitIj" indique la quantité de données du type d'image intra-codée (Ij) du $j^{ème}$ GOP,

"N" indique le nombre d'images intra-codée, et
"bit Pj" indique la quantité de données d'images du type inter-codée prédictive du $j^{ième}$ GOP.

**10.** Appareil de codage d'image selon la revendication 6, dans lequel ledit circuit de commande de codage (30) est utilisable pour déterminer la quantité cible de chaque GOP à partir de l'équation suivante :

$$GOP_bj = B \times GOP_dj / \sum_{j=0}^{M-1} GOP_dj$$

où

"M" indique le nombre desdits GOP,
"j" indique un entier (j = 0, 1, 2, ......, M-1),
"GOP_bj" indique ladite quantité de données de cible de la $j^{ième}$ image,
"B" indique ladite quantité de données disponible correspondant pour lesdits GOP sur la base d'un débit binaire de transmission, et
"GOP_dj" indique lesdites données de difficulté du $j^{ième}$ GOP.

FRAME MEMORY
BACKWARD ORIGINAL PICTURE
REFERENCE ORIGINAL PICTURE
FORWARD ORIGINAL PICTURE
12
INPUT PICTURE
MOTION VECTOR DETECTION
11
INTRA-FRAME/FORWARD/ BACKWARD/BIDIRECTIONALLY PREDICTIVE JUDGEMENT
13
PREDICTIVE MODE
INTRA-FRAME
FORWARD PREDICTION
BACKWARD PREDICTION
BIDIRECTIONAL PREDICTION
14a
14b
14c
14d
14
DCT
15
QUANTIZATION SCALE
QUANTI-ZATION Q=1
16
INVERSE QUANTIZATION
18
IDCT
20
21
VARIABLE LENGTH CODING
17
BIT STREAM
10
COUNTER
31
BIT RATE CALCULATION
32
QUANTIZATION SCALE SETTING CIRCUIT
33
30
BUFFER FEEDBACK
BACKWARD PREDICTIVE PICTURE
BANK SWITCHING
FORWARD PREDICTIVE PICTURE
FRAME MEMORY
22
MOTION COMPENSATION
23
MOTION VECTOR
DELAY ELEMENT
43
PREDICTIVE MODE
44a
44b
44c
44d
44
DCT
45
QUANTI-ZATION
46
INVERSE QUANTIZATION
48
IDCT
50
51
VARIABLE LENGTH CODING
47
40
TRANSMITTING BUFFER
49
OUTPUT BIT STREAM
55
52
53
FIG.1

START
FIX QUANTIZATION STEP SIZE TO 1 TO CARRY OUT ENCODING TO DETERMINE CODE QUANTITY GENERATED (DIFFICULTY)
ST1
DETERMINE CODE QUANTITY bi PER UNIT TIME FROM DIFFICULTY AND TOTAL QUANTITY OF USABLE DATA
ST2
CARRY OUT ENCODING BY QUANTIZATION STEP SIZE BASED ON ALLOCATED CODE QUANTITY bi
ST3
END

FIG.2

START
INPUT OF PICTURE
ST1
READ-IN OF FRAME ALLOCATED CODE QUANTITY bi
ST2
ENCODING
ST3
SEQUENCE END ?
ST4
NO
YES
END

FIG.3

B
B
I
B
B
P
B
B
P
B
B
P
B
B
P

FIG.4

GOP0
GOP1
GOP2
GOP3
I
P
I
P
I
P
I
P

FIG.5

START
INPUT OF PICTURE
ST1
ST2
LEADING PICTURE OF GOP ?
NO
YES
ST3
READ-IN OF ALLOCATED CODE QUANTITY GOP bj
ST4
ENCODING
NO
SEQUENCE END ?
ST5
YES
END

FIG.6

t=t1
t=t2
t=t3
PC1
PC2
PC3
PC12
PC23
A
B

FIG.7

A
MOVING PICTURE VIDEO SIGNAL
F0
FRAME DATA
x0
F1
NON-INTERPOLATION FRAME (INTRA-FRAME ENCODING)
x1
F2
INTERPOLATION FRAME
x2
F3
NON-INTERPOLATION FRAME (INTRA-FRAME ENCODING)
x3
F4
INTERPOLATION FRAME
x4
F5
NON-INTERPOLATION FRAME (INTRA-FRAME ENCODING)
x5
SP1
SP2
SP3
SP4
B
TRANSMIT DATA
F1X
TRANSMIT NON-INTERPOLATED FRAME DATA
F2X
TRANSMIT INTERPOLATED FRAME DATA
F3X
F4X
F5X

FIG.8

60
INPUT VIDEO SIGNAL
PRE-PROCESSING (Y/C SEPARATION)
61
LUMINANCE SIGNAL
COLOR DIFFERENCE SIGNAL
62a
A/D CONVERSION
A/D CONVERSION
62b
LUMINANCE SIGNAL FRAME MEMORY
COLOR DIFFERENCE SIGNAL FRAME MEMORY
63
64
FORMAT CONVERSION (FRAME → BLOCK)
ENCODER
65
BIT STREAM
70
MEDIA
BIT STREAM
DECODER
81
LUMINANCE SIGNAL FRAME MEMORY
COLOR DIFFERENCE SIGNAL FRAME MEMORY
83
FORMAT CONVERSION (BLOCK → FRAME)
82
84a
D/A CONVERSION
D/A CONVERSION
84b
LUMINANCE SIGNAL
COLOR DIFFERENCE SIGNAL
OUTPUT VIDEO SIGNAL
POST-PROCESSING (Y/C MIXING)
85
80

FIG.9

8DOTS
8DOTS
Y [1]
Y [2]
Y [3]
Y [4]
Cb[5]
Cb[6]
(C) MACRO BLOCK
H DOTS
V LINES
SLICE 1
SLICE 2
SLICE 3
SLICE N
(A) FRAME

1
2
3
4
5
6
7
8
M
(B) SLICE

FIG.10

FRAME MEMORY
BACKWARD ORIGINAL PICTURE
REFERENCE ORIGINAL PICTURE
FORWARD ORIGINAL PICTURE
63
103
INTRA-FRAME/FORWARD/ BACKWARD/BIDIRECTIONALLY PREDICTIVE JUDGEMENT
PREDICTIVE MODE
INPUT PICTURE
MOTION VECTOR DETECTION
101
INTRA-FRAME
FORWARD PREDICTION
BACKWARD PREDICTION
BIDIRECTIONAL PREDICTION
104d
104a
104b
104
104c
DCT
105
BUFFER FEEDBACK
QUANTIZATION SCALE
QUANTI-ZATION
106
VARIABLE LENGTH CODING
107
BIT STREAM
TRANSMITTING BUFFER
109
OUTPUT BIT STREAM
INVERSE QUANTIZATION
108
MOTION VECTOR
IDCT
110
111
65
MOTION COMPENSATION
113
BACKWARD PREDICTIVE PICTURE
BANK SWITCHING
FORWARD PREDICTIVE PICTURE
112
FRAME MEMORY

FIG.11

INPUT BIT STREAM
RECEIVING BUFFER
201
VARIABLE LENGTH DECODING
202
PREDICTIVE MODE
QUANTIZATION SCALE
INVERSE QUANTIZATION
203
MOTION VECTOR
IDCT
204
205
MOTION COMPENSATING
207
OUTPUT REPRODUCTION PICTURE
BACKWARD PREDICTIVE PICTURE
FORWARD PREDICTIVE PICTURE
BANK SWITCHING
FRAME MEMORY
206
61

FIG.12